# EUROPEAN PATENT APPLICATION

(11) **EP 3 962 163 A1**
(43) Date of publication of application: **02.03.2022**
(21) Application number: 20795099.9
(22) Date of filing: 24.03.2020
(51) Int. Cl.: H04W 28/16

(54) **DATA TRANSMISSION METHOD AND DEVICE**

(30) Priority: 22.04.2019 CN 201910327189
(71) Applicant: Spreadtrum Communications (Shanghai) Co., Ltd., Shanghai 201203 (CN)
(72) Inventor: JAUH, Yuhren, Shanghai 201203 (CN); YU, Chinghwa, Shanghai 201203 (CN); XU, Yanchao, Shanghai 201203 (CN); WANG, Long, Shanghai 201203 (CN)
(74) Representative: Boult Wade Tennant LLP
(86) International application number: PCT/CN2020/080804
(87) International publication number: WO 2020/215953

(57) **Abstract**

Provided are a data transmission method and device. The transmission method comprises: determining that some of a plurality of transmission links are uplink transmission links or downlink transmission links, and the remaining transmission links are common transmission links, wherein the common transmission links are used for transmitting uplink data frames or downlink data frames, the uplink transmission links are only used for transmitting uplink data frames, and the downlink transmission links are only used for transmitting downlink data frames; determining corresponding transmission links for data frames to be transmitted; and when the common transmission links or the downlink transmission links obtain a transmission opportunity, respectively transmitting a data frame at the top of a queue thereof. By means of the technical solution of the present invention, configuring uplink transmission links and downlink transmission links can improve the data frame transmission efficiency, and a better compatibility with existing systems and a lower design complexity are realized.

## Description

### CROSS-REFERENCE TO RELATED APPLICATIONS

This application claims the benefit of priority to Chinese Patent Application No. 201910327189.8, filed on April 22, 2019, and entitled "DATA TRANSMISSION METHOD AND DEVICE", the entire disclosure of which is incorporated herein by reference.

### TECHNICAL FIELD

The present disclosure generally relates to communication field, and more particularly, to a data transmission method and device.

### BACKGROUND

In a conventional Wireless Fidelity (Wi-Fi) system, there is merely one Media Access Control (MAC) layer and one physical layer. Therefore, data frames are transmitted merely on a single link in the Wi-Fi system.

At present, there are some solutions for multi-link Wi-Fi systems. However, in multi-link Wi-Fi systems, spatial use of channels and transmission efficiency of data frames still need to be improved.

### SUMMARY

In an embodiment of the present disclosure, a data transmission method is provided, wherein the method is applied to an Access Point (AP) in a multi-link Wi-Fi system which includes a plurality of links, each of the plurality of links includes a queuing list for determining a transmission order of data frames in the link, and the method includes: determining a portion of the plurality of links as uplink link or downlink link, and the other portion of the plurality of links as ordinary link, wherein the ordinary link is configured to transmit uplink or downlink data frames, the uplink link is configured to transmit uplink data frames, and the downlink link is configured to transmit downlink data frames; determining links for data frames to be transmitted; and when the ordinary link or the downlink link obtains a transmission opportunity, transmitting a data frame at a head of a queuing list of the link.

Optionally, determining a portion of the plurality of links as uplink link or downlink link includes: the AP configuring a portion of the plurality of links as uplink link or downlink link.

Optionally, after the portion of the plurality of links is determined as uplink link or downlink link, the method further includes: the AP broadcasting index information of the uplink link or the downlink link.

Optionally, determining a portion of the plurality of links as uplink link or downlink link includes: the AP configuring a portion of the plurality of links as uplink link or downlink link in a default way.

Optionally, determining a portion of the plurality of links as uplink link or downlink link includes: the AP configuring a portion of the plurality of links as uplink link or downlink link based on bandwidth of the plurality of links.

Optionally, determining links for data frames to be transmitted includes: the AP determining links for data frames to be transmitted based on length of the data frames to be transmitted.

Optionally, the AP receives from a station (STA) an acknowledgement message of the data frame on the downlink link on which the data frame is transmitted.

Optionally, the AP receives from a STA an acknowledgement message of the data frame on the uplink link.

In an embodiment of the present disclosure, a data transmission method is provided, wherein the method is applied to a STA in a multi-link Wi-Fi system which includes a plurality of links, each of the plurality of links includes a queuing list for determining a transmission order of data frames in the link, and the method includes: determining a portion of the plurality of links as uplink link or downlink link, and the other portion of the plurality of links as ordinary link, wherein the ordinary link is configured to transmit uplink or downlink data frames, the uplink link is configured to transmit uplink data frames, and the downlink link is configured to transmit downlink data frames; determining links for data frames to be transmitted; and when the ordinary link or the uplink link obtains a transmission opportunity, transmitting a data frame at a head of a queuing list of the link.

Optionally, determining a portion of the plurality of links as uplink link or downlink link includes: receiving index information of the uplink link or the downlink link; and configuring a portion of the plurality of links as the uplink link or the downlink link based on the index information.

Optionally, determining a portion of the plurality of links as uplink link or downlink link includes: configuring a portion of the plurality of links as uplink link or downlink link in a default way.

Optionally, determining links for data frames to be transmitted includes: determining links for data frames to be transmitted based on length of the data frames to be transmitted.

Optionally, the STA receives from an AP an acknowledgement message of the data frame on the uplink link on which the data frame is transmitted.

Optionally, the STA receives from an AP an acknowledgement message of the data frame on the downlink link.

In an embodiment of the present disclosure, a data transmission device which is applied to an AP and includes a memory and a processor is provided, wherein the memory has a computer program stored therein, and when the processor executes the computer program, the above data transmission method is performed.

In an embodiment of the present disclosure, a data transmission device which is applied to a STA and includes a memory and a processor is provided, wherein the memory has a computer program stored therein, and when the processor executes the computer program, the above data transmission method is performed.

Embodiments of the present disclosure may provide following advantages.

In embodiments of the present disclosure, the data transmission method includes: determining a portion of the plurality of links as uplink link or downlink link, and the other portion of the plurality of links as ordinary link, wherein the ordinary link is configured to transmit uplink or downlink data frames, the uplink link is configured to transmit uplink data frames, and the downlink link is configured to transmit downlink data frames; determining links for data frames to be transmitted; and when the ordinary link or the downlink link obtains a transmission opportunity, transmitting a data frame at a head of a queuing list of the link. By configuring the uplink link and the downlink link, spatial reuse of channels and transmission efficiency of the data frames may be improved, compatibility with existing systems is relatively good, and complexity of design is relatively low.

### BRIEF DESCRIPTION OF THE DRAWINGS

Figure 1 is a diagram of a multi-link Wi-Fi system according to an embodiment;
Figure 2 is a diagram of queuing lists when data transmission is performed in the multi-link Wi-Fi system as shown in Figure 1;
Figure 3 is a flow chart of a data transmission method according to an embodiment;
Figure 4 is a diagram of queuing lists in the method as shown in Figure 3;
Figure 5 is a flow chart of a data transmission method according to an embodiment;
Figure 6 is a diagram of queuing lists in the method as shown in Figure 5;
Figure 7 is a structural diagram of a data transmission device according to an embodiment; and
Figure 8 is a structural diagram of a data transmission device according to an embodiment.

### DETAILED DESCRIPTION

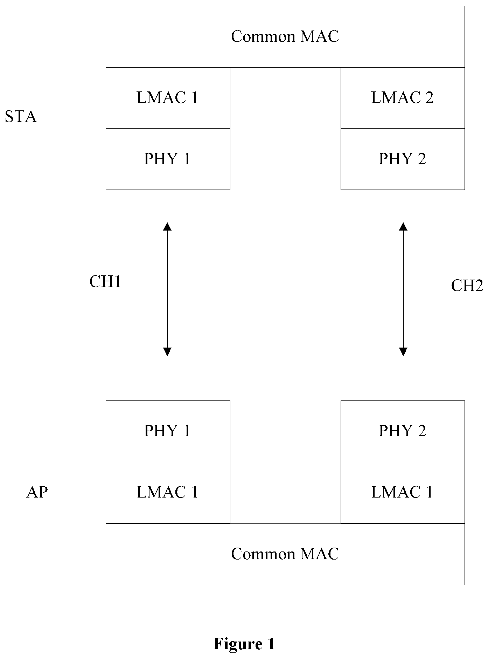

Referring to Figure 1, Figure 1 is a diagram of a multi-link Wi-Fi system according to an embodiment.

The multi-link Wi-Fi system may include a STA, an AP and multiple links. Data frames are transmitted on the multiple links between the STA and the AP. In the embodiment as shown in Figure 1, the multi-link Wi-Fi system includes a first link CH1 and a second link CH2.

In some embodiments, the first link CH1 and the second link CH2 may occupy different frequency band resources to implement data transmission. For example, the first link CH1 may occupy a frequency band with a center frequency of 2 GHz, and the second link CH2 may occupy a frequency band with a center frequency of 5 GHz. In some embodiments, the first link CH1 and the second link CH2 may occupy a same frequency band to implement data transmission. In some embodiments, the frequency band shared by the two links may be relatively wide so as to be used for simultaneous data transmission on the two links, or may be used by the two links for data transmission via time division multiplexing.

In the embodiment as shown in Figure 1, at the STA, data frames to be transmitted may be arranged into a queuing list of the first link CH1 and a queuing list of the second link CH2, respectively. In some embodiments, the data frames to be transmitted can be arranged into queuing lists of different links in the form of indexes.

In the embodiment as shown in Figure 1, at either the STA or the AP, a network layer includes a MAC layer (Common MAC), and below the MAC layer there are a first sub MAC layer LMAC1, a second sub MAC layer LMAC2, a first physical layer PHY1 and a second physical layer PHY2. Specifically, the first sub MAC layer LMAC1 and the first physical layer PHY1 are configured to enable the STA or the AP to transmit data on the first link CH1, and the second sub MAC layer LMAC2 and the second physical layer PHY2 are configured to enable the STA or the AP to transmit data on the second link CH2. In some embodiments, the multi-link Wi-Fi system include multiple links, thus, the multi-link Wi-Fi system may include multiple sub MAC layers and multiple corresponding physical layers.

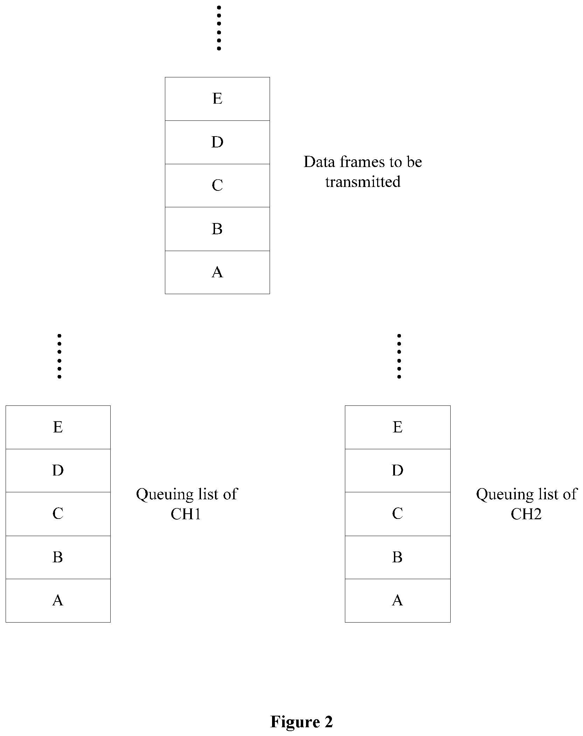

Referring to Figure 2, Figure 2 is a diagram of queuing lists when data transmission is performed in the multi-link Wi-Fi system as shown in Figure 1. The data frames to be transmitted include a data frame A, a data frame B, a data frame C, a data frame D and a data frame E. In an existing multi-link Wi-Fi system, the data frames to be transmitted are arranged in a queuing list of each link, and may be transmitted on any link.

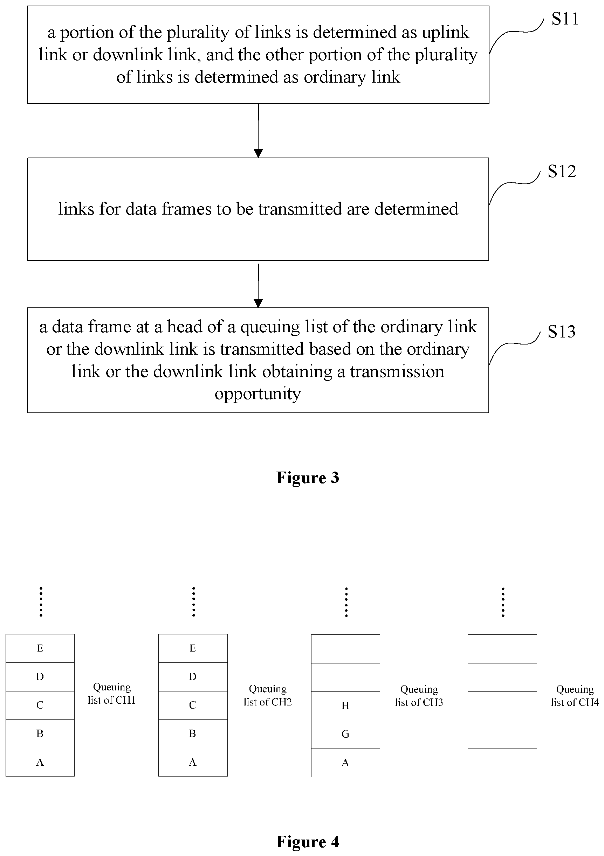

Referring to Figures 3 and 4, Figure 3 is a flow chart of a data transmission method according to an embodiment, and Figure 4 is a diagram of queuing lists in the method as shown in Figure 3. In the embodiment as shown in Figures 3 and 4, the multi-link Wi-Fi system includes a first link CH1, a second link CH2, a third link CH3 and a fourth link CH4, and queuing lists of these links are illustrated in Figure 4. The method may be applied in an AP.

The method is applied in a multi-link Wi-Fi system which includes a plurality of links, and each of the plurality of links includes a queuing list for determining a transmission order of data frames in the link.

In S11, a portion of the plurality of links is determined as uplink link or downlink link, and the other portion of the plurality of links is determined as ordinary link.

In some embodiments, the ordinary link is configured to transmit uplink or downlink data frames, the uplink link is configured to merely transmit uplink data frames, and the downlink link is configured to merely transmit downlink data frames. It should be noted that, determining a portion of the plurality of links as uplink link or downlink link comprises: all of the portion of the plurality of links is determined as uplink link, all of the portion of the plurality of links is determined as downlink link, or, a part of the portion of the plurality of links is determined as uplink link and the other part of the portion of the plurality of links is determined as downlink link. That is, after configuration, the portion of the plurality of links may include merely uplink link, or merely downlink, or uplink link and downlink link.

In some embodiments, the AP configures a portion of the plurality of links as uplink link or downlink link, and broadcasts index information of the uplink link or the downlink link. Therefore, the STA may determine which links are uplink links or downlink links.

In some embodiments, the AP configures a portion of the plurality of links as uplink link or downlink link in a default way.

In the embodiment as shown in Figure 4, the third link is configured as the downlink link, the fourth link is configured as the uplink link, and the first and second links are ordinary links.

In some embodiments, the AP configures a portion of the plurality of links as uplink link or downlink link based on bandwidth of the plurality of links. Specifically, the link with relatively large bandwidth is configured as a downlink link, and the link with relatively small bandwidth is configured as an uplink link.

In S12, links for data frames to be transmitted are determined.

In some embodiments, after a portion of the plurality of links is determined as uplink link or downlink link, the AP may determine links for data frames to be transmitted, and add the data frames to be transmitted into queuing lists of the corresponding links.

In the embodiment as shown in Figure 4, the data frames to be transmitted at the AP may be transmitted on the ordinary link or the downlink link. For example, based on configuration by the AP, the data frame A may be transmitted on the ordinary link or the downlink link (CH3), the data frames B, C, D and E may be transmitted on the ordinary link, and the data frames G and H may be transmitted on the downlink link.

In some embodiments, the links for data frames to be transmitted may be determined based on length of the data frames to be transmitted. Specifically, a first threshold may be set, and if the length of the data frame to be transmitted is greater than the first threshold, the AP transmits the data frame on the downlink link, otherwise, the AP transmits the data frame on the ordinary link.

In S13, when the ordinary link or the downlink link obtains a transmission opportunity, a data frame at a head of a queuing list of the link is transmitted.

In the embodiment as shown in Figure 4, if the first link obtains a transmission opportunity, the AP transmits the data frame A on the first link. After the data frame A starts to be transmitted, the downlink link CH3 obtains a transmission opportunity, and thus the data frame G is transmitted on the downlink link.

When transmission of a data frame is completed, the AP may receive an acknowledgment message (ACK) from the STA. In some embodiments, the AP may receive the ACK about the data frame from the STA on the downlink link on which the data frame is transmitted. For example, after transmitting the data frame A on the downlink link, the AP may receive the ACK on the downlink link.

In some embodiments, the AP may receive the ACK about the data frame from the STA on the uplink link. For example, after transmitting the data frame A on the downlink link, the AP may receive the ACK on the uplink link.

Therefore, the above embodiments can maintain compatibility with an existing Wi-Fi system while also possessing certain flexibility.

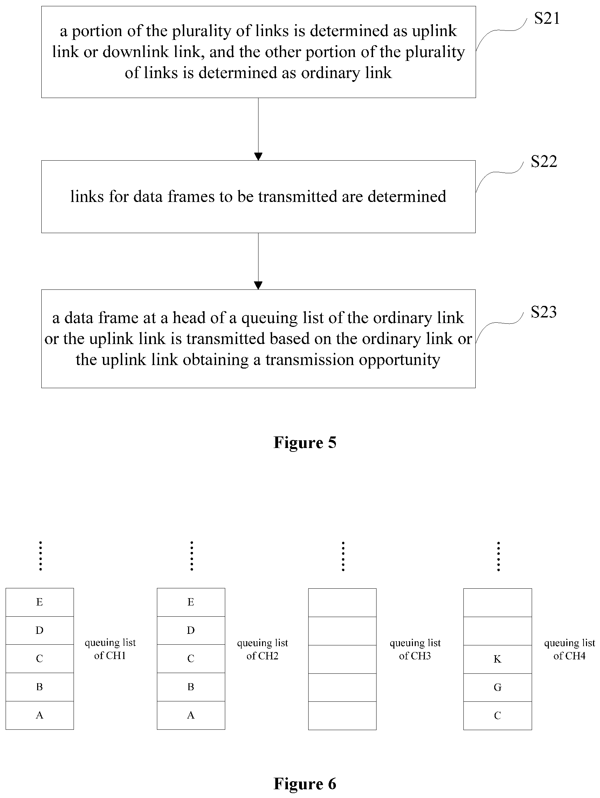

Referring to Figures 5 and 6, Figure 5 is a flow chart of a data transmission method according to an embodiment, and Figure 6 is a diagram of queuing lists in the method as shown in Figure 5. In the embodiment as shown in Figures 5 and 6, the multi-link Wi-Fi system includes a first link CH1, a second link CH2, a third link CH3 and a fourth link CH4, and queuing lists of these links are illustrated in Figure 6. The method may be applied in a STA.

The method is applied in a multi-link Wi-Fi system which includes a plurality of links, and each of the plurality of links includes a queuing list for determining a transmission order of data frames in the link.

In S21, a portion of the plurality of links is determined as uplink link or downlink link, and the other portion of the plurality of links is determined as ordinary link.

In some embodiments, the ordinary link is configured to transmit uplink or downlink data frames, the uplink link is configured to merely transmit uplink data frames, and the downlink link is configured to merely transmit downlink data frames.

In some embodiments, the STA receives index information of the uplink link or the downlink link, and configures a portion of the plurality of links as uplink link or downlink link based on the index information.

In some embodiments, the STA configures a portion of the plurality of links as uplink link or downlink link in a default way.

In the embodiment as shown in Figure 6, the third link is configured as the downlink link, the fourth link is configured as the uplink link, and the first and second links are ordinary links.

In S22, links for data frames to be transmitted are determined.

In some embodiments, after a portion of the plurality of links is determined as uplink link or downlink link, the STA may determine links for data frames to be transmitted, and add the data frames to be transmitted into queuing lists of the corresponding links.

In the embodiment as shown in Figure 6, the data frames to be transmitted at the STA may be transmitted on the ordinary link or the uplink link. For example, based on configuration by the STA, the data frame C may be transmitted on the ordinary link or the uplink link (CH4), the data frames A, B, D and E may be transmitted on the ordinary link, and the data frames G and K may be transmitted on the uplink link.

In some embodiments, the links for data frames to be transmitted may be determined based on length of the data frames to be transmitted. Specifically, a second threshold may be set, and if the length of the data frame to be transmitted is smaller than the second threshold, the STA transmits the data frame on the uplink link, otherwise, the STA transmits the data frame on the ordinary link.

In S23, when the ordinary link or the uplink link obtains a transmission opportunity, a data frame at a head of a queuing list of the link is transmitted.

In the embodiment as shown in Figure 6, if the first link obtains a transmission opportunity, the STA transmits the data frame A on the first link. After the data frame A starts to be transmitted, the uplink link CH4 obtains a transmission opportunity, and the data frame C is transmitted on the uplink link.

When transmission of a data frame is completed, the STA may receive an ACK from the AP. In some embodiments, the STA may receive the ACK about the data frame from the AP on the uplink link on which the data frame is transmitted. For example, after transmitting the data frame C on the uplink link, the STA may receive the ACK on the uplink link.

In some embodiments, the STA may receive the ACK about the data frame from the AP on the downlink link. For example, after transmitting the data frame C on the uplink link, the STA may receive the ACK on the downlink link.

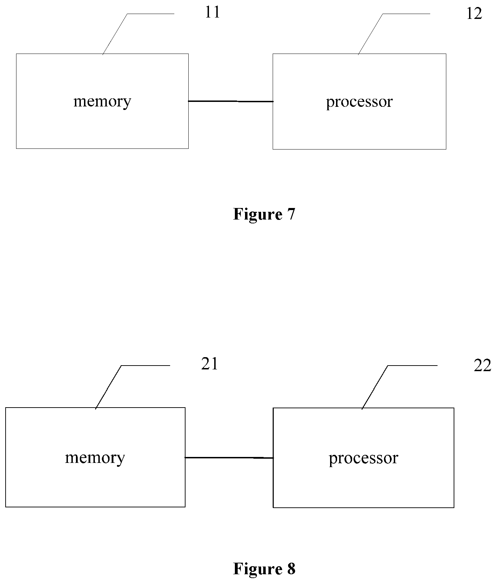

Referring to Figure 7, Figure 7 is a structural diagram of a data transmission device according to an embodiment. The device may be applied in an AP. The device includes a memory 11 and a processor 12, where the memory 11 has a computer program stored therein which can be run on the processor 12 and is for implementing steps in the above data transmission method, and when the processor 12 executes the computer program, the steps are performed. The memory 11 may include a Read Only Memory (ROM), a Random Access Memory (RAM), a magnetic disk or an optical disk. The steps of the data transmission method can be referred to the above descriptions, and are not described in detail here.

Referring to Figure 8, Figure 8 is a structural diagram of a data transmission device according to an embodiment. The device may be applied in a STA. The device includes a memory 21 and a processor 22, where the memory 21 has a computer program stored therein which can be run on the processor 22 and is for implementing steps in the above data transmission method, and when the processor 22 executes the computer program, the steps are performed. The memory 21 may include a ROM, a RAM, a magnetic disk or an optical disk. The steps of the data transmission method can be referred to the above descriptions, and are not described in detail here.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A data transmission method, **characterized in that** the method is applied to an access point in a multi-link Wi-Fi system which comprises a plurality of links, each of the plurality of links comprises a queuing list for determining a transmission order of data frames in the link, and the method comprises:
determining a portion of the plurality of links as uplink link or downlink link, and the other portion of the plurality of links as ordinary link, wherein the ordinary link is configured to transmit uplink or downlink data frames, the uplink link is configured to transmit uplink data frames, and the downlink link is configured to transmit downlink data frames;
determining links for data frames to be transmitted; and
transmitting a data frame at a head of a queuing list of the ordinary link or the downlink link based on the ordinary link or the downlink link obtaining a transmission opportunity.

2. The method according to claim 1, **characterized in that** said determining a portion of the plurality of links as uplink link or downlink link comprises:
the access point configuring a portion of the plurality of links as uplink link or downlink link.

3. The method according to claim 2, **characterized in that** after the portion of the plurality of links is determined as uplink link or downlink link, the method further comprises:
the access point broadcasting index information of the uplink link or the downlink link.

4. The method according to claim 1, **characterized in that** said determining a portion of the plurality of links as uplink link or downlink link comprises:
the access point configuring a portion of the plurality of links as uplink link or downlink link in a default way.

5. The method according to claim 1, **characterized in that** said determining a portion of the plurality of links as uplink link or downlink link comprises:
the access point configuring a portion of the plurality of links as uplink link or downlink link based on bandwidth of the plurality of links.

6. The method according to claim 1, **characterized in that** said determining links for data frames to be transmitted comprises:
the access point determining links for data frames to be transmitted based on length of the data frames to be transmitted.

7. The method according to claim 1, **characterized in that** the access point receives from a station an acknowledgement message of the data frame on the downlink link on which the data frame is transmitted.

8. The method according to claim 1, **characterized in that** the access point receives from a station an acknowledgement message of the data frame on the uplink link.

9. A data transmission method, **characterized in that** the method is applied to a station in a multi-link Wi-Fi system which comprises a plurality of links, each of the plurality of links comprises a queuing list for determining a transmission order of data frames in the link, and the method comprises:
determining a portion of the plurality of links as uplink link or downlink link, and the other portion of the plurality of links as ordinary link, wherein the ordinary link is configured to transmit uplink or downlink data frames, the uplink link is configured to transmit uplink data frames, and the downlink link is configured to transmit downlink data frames;
determining links for data frames to be transmitted; and
transmit a data frame at a head of a queuing list of the ordinary link or the uplink link based on the ordinary link or the uplink link obtaining a transmission opportunity.

10. The method according to claim 9, **characterized in that** said determining a portion of the plurality of links as uplink link or downlink link comprises:
receiving index information of the uplink link or the downlink link; and
configuring a portion of the plurality of links as the uplink link or the downlink link based on the index information.

11. The method according to claim 9, **characterized in that** said determining a portion of the plurality of links as uplink link or downlink link comprises:
configuring a portion of the plurality of links as uplink link or downlink link in a default way.

12. The method according to claim 9, **characterized in that** said determining links for data frames to be transmitted comprises:
determining links for data frames to be transmitted based on length of the data frames to be transmitted.

13. The method according to claim 9, **characterized in that** the station receives from an access point an acknowledgement message of the data frame on the uplink link on which the data frame is transmitted.

14. The method according to claim 9, **characterized in that** the station receives from an access point an acknowledgement message of the data frame on the downlink link.

15. A data transmission device comprising a memory and a processor, **characterized in that** the memory has a computer program stored therein, and when the processor executes the computer program, the method according to any one of claims 1 to 8 is performed.

16. A data transmission device comprising a memory and a processor, **characterized in that** the memory has a computer program stored therein, and when the processor executes the computer program, the method according to any one of claims 9 to 14 is performed.
